# FASCICULE DE BREVET EUROPEEN

(11) **EP 2 208 610 B1**
(45) Date de publication et mention de la délivrance du brevet: **30.11.2011**
(21) Numéro de dépôt: 10150998.2
(22) Date de dépôt: 18.01.2010
(51) Int. Cl.: B29C 70/02, B29C 70/22, B29B 17/00, B32B 7/06

(54) **Cale d'épaisseur à haute résistance en pression et son procédé de fabrication**
Hochdruckfeste Unterlegscheibe und Herstellungsverfahren dafür
Shim with high resistance to pressure and method for its production

(30) Priorité: 19.01.2009 FR 0950310
(43) Date de publication de la demande: 21.07.2010
(73) Titulaire: Gastel, Daniel André, 78370 Plaisir les Gatines (FR)
(72) Inventeur: Gastel, Daniel André, 78370 Plaisir les Gatines (FR)
(74) Mandataire: Thinat, Michel

(56) Documents cités:
- EP-A- 1 502 727
- FR-A- 2 678 210
- FR-A- 2 831 095
- FUKUDA Y ET AL: "EXAMPLES OF FRP RECYCLING IN JAPAN" COMPOSITES.PLASTIQUES RENFORCES FIBRES DE VERRE TEXTILE, CENTRE DOC. VERRE TEXTILE PLAS RE. PARIS, FR, vol. 33, no. 6, 1 novembre 1993 (1993-11-01), pages 28-31, XP000432965 ISSN: 0754-0876

## Description

L'invention concerne en général les cales d'épaisseur.

Plus précisément, l'invention concerne, selon un premier aspect, un produit stratifié présentant une épaisseur réglable par délitage, ce produit comprenant un empilement de feuilles présentant chacune une résistance intrinsèque au déchirement, et adhérant l'une à l'autre par une force de liaison plus faible que la résistance des feuilles au déchirement, ce dont il résulte que chaque feuille peut être détachée de l'empilement sans se déchirer.

Des produits de ce type sont enseignés dans le brevet d'invention FR2831095B1, et sont notamment utilisés comme cales de réglage pour des ensembles mécaniques. Ces ensembles mécaniques présentent généralement des jeux importants en certains points, résultant de la combinaison des tolérances de fabrication. Ces jeux sont compensés en insérant des cales. Le document FR2831095B1 montre une cale d'épaisseur selon le préambule de la revendication 1 et un procédé de fabrication d'une cale d'épaisseur.

L'épaisseur de ces cales est ajustée en retirant les feuilles avant ou arrières une à une, jusqu'à ce que l'épaisseur recherchée soit atteinte.

Ces cales ont un tel succès de part leur légèreté et leur facilité d'utilisation qu'il serait intéressant de pouvoir les utiliser dans des ensembles mécaniques pour lesquels les constructeurs accordent traditionnellement plus de confiance aux cales métalliques pelables, notamment à cause des contraintes en températures et en pression auxquelles sont soumis ces ensembles mécaniques.

L'épaisseur d'une cale en matériaux composites de l'état antérieur de la technique peut présenter une diminution d'épaisseur lorsqu'elle est soumise à des pressions élevées. Un problème qui se pose est notamment celui de donner à la cale une haute résistance en pression de façon à conserver l'épaisseur ajustée par pelage dans des plages de tolérance acceptables.

Pour remédier aux problèmes posés par l'état antérieur de la technique, l'invention a pour objet une cale d'épaisseur comprenant un empilement de feuilles, chaque feuille comprenant un réseau maillé de fibres qui détermine une épaisseur de ladite feuille, les fibres étant enrobées d'un matériau polymère qui lie au moins une première partie des fibres de ladite feuille à une deuxième partie de fibres d'une feuille voisine avec une force de cohésion inférieure à une limite de rupture des fibres de façon à permettre de peler une feuille sans la déchirer. La cale est remarquable en ce qu'une maille du réseau maillé comprend des particules de dimensions inférieures aux dimensions de la maille et au diamètre d'une fibre et de dureté au moins égale à celle des fibres, selon la revendication 1.

Avantageusement, le matériau polymère comprend un cyano esther.

De préférence, les particules et les fibres comprennent au moins une matière identique.

Particulièrement lesdites particules comprennent des particules de dimensions micrométriques.

Particulièrement encore lesdites particules comprennent des particules de dimensions nanométriques.

L'invention a aussi pour objet un procédé de fabrication d'une cale d'épaisseur comprenant:
- une étape de sélection dans laquelle on sélectionne des feuilles comprenant chacune un réseau maillé de fibres ;
- une étape d'incorporation dans laquelle on charge un matériau polymérisable en y incorporant des particules de dimensions inférieures aux mailles dudit réseau et de dureté au moins égale à celle des fibres ;
- une étape d'imprégnation dans laquelle on imprègne les feuilles avec le matériau polymérisable chargé ;
- une étape d'empilement dans laquelle on empile les feuilles les unes sur les autres et on presse les feuilles empilées ;
- une étape d'étuvage dans laquelle on amène les feuilles empilées pressées à une température suffisante pour polymériser ledit matériau de façon à enrober les fibres de matériau polymère qui lie au moins une première partie des fibres de ladite feuille à une deuxième partie de fibres d'une feuille voisine, selon la revendication 6.

Avantageusement, le procédé comprend une étape de préparation effectuée avant l'étape d'imprégnation et dans laquelle on combine un cyano ester avec le matériau polymérisable.

De préférence, le procédé comprend une étape de broyage effectuée avant l'étape d'incorporation et dans laquelle lesdites particules sont produites en broyant des chutes qui proviennent de cales d'épaisseur précédemment fabriquées.

Particulièrement, les particules sont incorporées dans le matériau polymérisable par pulvérisation et/ou par agitation.

Particulièrement aussi, du solvant est ajouté dans le matériau polymérisable en quantité supérieure au matériau polymérisable.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective éclatée d'un produit stratifié pour réaliser une cale d'épaisseur,
- la figure 2 est une vue en perspective qui montre les interactions entre les fibres d'une couche supérieure et les fibres d'une couche inférieure,
- la figure 3 montre une structure de feuille conforme à l'invention.

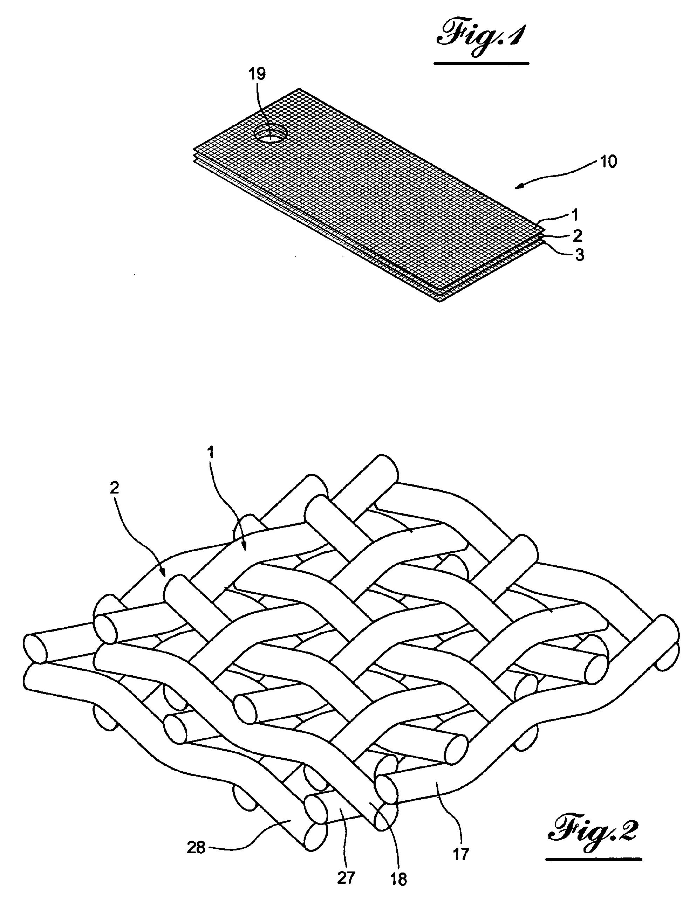

En référence à la figure 1, une cale d'épaisseur 10 comprend plusieurs feuilles 1, 2, 3, par exemple sur le modèle de la structure présentée dans le brevet FR2831095B1 ou dans le brevet FR2854098B1. Ici seulement trois feuilles sont représentées à titre purement illustratif mais on comprendra aisément que la quantité de feuilles superposées, est généralement nettement supérieure à trois. On rappelle que les feuilles sont en tissu de verre, de carbone, d'aramide, de céramique ou d'autres fibres sélectionnées pour leur qualité de résistance à la compression en vue de garantir une épaisseur constante de feuille, et pour leur qualité de résistance à la traction en vue de garantir une résistance élevée au déchirement.

On rappelle encore que les feuilles sont enduites d'un matériau polymère dont une polymérisation finale en maintenant les feuilles serrées les unes contre les autres, procure au moins deux effets techniques majeurs. Un premier effet est de maintenir les feuilles liées entre elles avec une force d'adhésion suffisamment élevée pour assurer une cohésion suffisante du produit stratifié et suffisamment basse pour permettre un arrachement volontaire de feuilles une à une sans déchirement, en d'autres termes un maintien ou un arrachement de chaque feuille dans son intégralité. Un deuxième effet est d'offrir une haute résistance au cisaillement entre feuilles. Cette haute résistance au cisaillement, en s'opposant aux glissement des feuilles les unes sur les autres, en combinaison avec les qualités de résistance à la traction des fibres, empêche le cintrage (bending en anglais) du produit stratifié en vue de garantir une planéité parfaite.

Le premier effet technique est primordial dans les applications de calage de haute précision car l'arrachage de chaque feuille garantit une diminution d'épaisseur égale à l'épaisseur d'une feuille. Un nombre initial de feuilles donnant une épaisseur initiale connue, un nombre final de feuilles donne une épaisseur finale qu'il est possible de déterminer avec précision.

Le deuxième effet technique est tout aussi primordial que le premier car on conçoit aisément qu'un cintrage simple ou multiple provoquerait des écarts entre les sommets des courbes qui iraient au-delà de l'épaisseur obtenue par accumulation des épaisseurs de feuilles.

On note sur la figure 1, un perçage circulaire 19 dans la cale 10 dont la fonction essentielle est de permettre un passage de vis de fixation entre les pièces à serrer. Un ou plusieurs perçages du type du perçage circulaire 19, sont usinés dans la cale 10 pour une fixation finale de la cale 10 lorsque les pièces à caler sont assemblées.

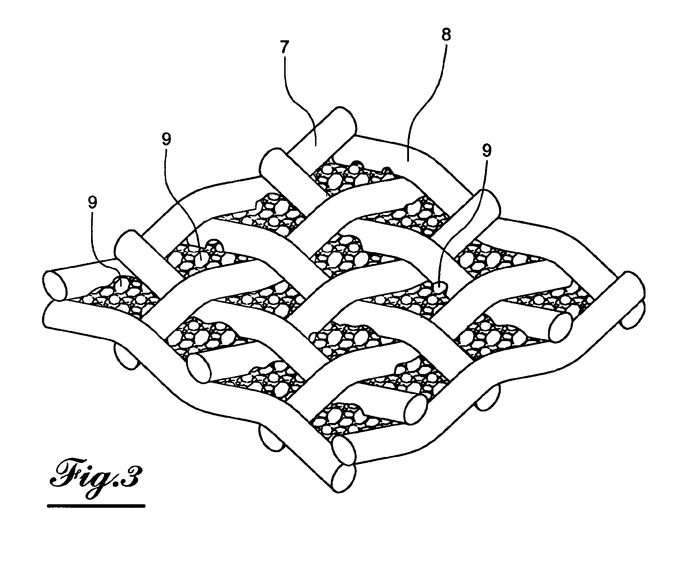

On explique à présent en référence aux figures 2 et 3, un procédé de fabrication d'une cale d'épaisseur 10 améliorée de façon à élever la résistance en pression de la calle.

Dans une étape de sélection, on sélectionne des feuilles 1, 2 comprenant chacune un réseau maillé de fibres tel que représentées sur la figure 2. Des fibres 7, croisées avec des fibres 8, donnent aux feuilles leurs caractéristiques mécaniques planaires essentielles. Notamment, des matières telles que le verre, le carbone, le polyamide aromatique, la céramique, prises seules ou en combinaison, sont choisies pour leurs qualités de souplesse, de limite de rupture élevée, de faible compressibilité, de dureté, de résistance à la chaleur et de légèreté.

L'épaisseur d'une feuille à ce stade, est parfaitement déterminable en fonction du diamètre des fibres. Ainsi, l'épaisseur représentée par la distance entre deux plans appliqués l'un contre la face inférieure et l'autre contre la face supérieure d'une feuille, résultant du chevauchement de deux fibres à l'endroit où elles se croisent dans un tissage, est égale au double du diamètre d'une fibre.

Cependant, lorsque plusieurs feuilles sont pressées l'une contre l'autre, l'épaisseur obtenue n'est pas nécessairement rigoureusement proportionnelle au nombre de feuilles à cause de l'intrication des fibres entre deux feuilles voisines. En effet, chaque maille définie par deux fibres 27 et deux fibres 28 d'une même feuille 2, délimite un espace vide dans lequel peut venir se loger une partie de fibre 17 ou 18 qui chevauche une autre fibre 18 ou 17 dans la feuille 1.

Indépendamment de l'étape de sélection, en d'autres termes, avant, pendant ou après l'étape de sélection des feuilles tissées, on prépare un matériau polymérisable à base de monomères ou d'oligomères de type époxyde, phénolique, vinyle ester, vinylique ou autres qui permettent l'obtention d'un thermoplastique ou d'un thermodurcissable par réticulation. Les critères de choix privilégiant les forces adhésives devant les forces cohésives du matériau après polymérisation, conduisent à ne pas retenir a priori la troisième classe de polymères comprenant les élastomères. On choisit de préférence un thermodurcissable pour ses caractéristiques de dureté dans les montées en température comme plus particulièrement une résine époxyde.

Dans une étape particulière de préparation, il est intéressant de combiner un cyano ester avec le matériau polymérisable, notamment la résine époxyde, de façon à permettre des tenues en température au-delà de 300°C.

Pour préparer le matériau polymérisable, on le charge en y incorporant des particules de dimensions inférieures au mailles du réseau. Les particules incorporée au cours de l'étape d'incorporation, ont une dureté au moins égale à celle des fibres.

Les particules peuvent être approvisionnées aux dimensions et aux caractéristiques de dureté requises auprès d'un fournisseur. De préférence, elles sont obtenues par broyage de fibres identiques à celles qui constituent les feuilles de sorte que les dimensions d'ordre micrométrique ou sub-micrométriques des particules, sont inférieures ou égales au diamètre d'une fibre.

Après fabrication sous forme de plaques planes, les cales d'épaisseur sont généralement usinées pour être adaptées à la géométrie des pièces auxquelles elles sont destinées. Les calles sont ensuite amenées sur site à l'épaisseur voulue par pelages successifs de feuilles. Les chutes d'usinage et les feuilles pelées après fabrication, contiennent naturellement les mêmes fibres que les feuilles sélectionnées en début de fabrication. Avantageusement, le procédé comprend une étape de broyage effectuée avant l'étape d'incorporation et dans laquelle les particules sont produites en broyant des chutes qui proviennent de cales d'épaisseur précédemment fabriquées. Ceci permet de recycler intelligemment les déchets en fabrication et éventuellement en exploitation si on met en place un cycle de récupération.

Le broyage a pour effet d'augmenter la surface spécifique du matériau broyé de même que le rapport surface sur volume d'une sphère augmente lorsque le rayon de la sphère diminue. Le broyage a donc pour effet de favoriser l'exploitation des qualités surfaciques du matériau constituant les fibres.

On broie les chutes jusqu'à obtenir une poudre ou une farine que l'on introduit dans un convertisseur cyclone pour séparer les particules les plus fines des particules les plus grosses.

Différentes méthodes peuvent être utilisées pour incorporer les particules dans le matériau polymérisable, à l'état liquide avant polymérisation. On peut pulvériser en sortie du convertisseur cyclone, les particules dans le liquide et agiter la solution de façon à homogénéiser l'émulsion ainsi obtenue. On peut aussi verser progressivement la farine de particules dans de faibles quantités de liquide en mouvement, progressivement augmentées jusqu'à obtenir la solution finale. On peut encore utiliser d'autres méthode de dispersion comme par exemple celles utilisant un homogénéisateur haute pression.

L'incorporation des particules dans le liquide a pour effet d'augmenter la viscosité apparente du liquide. Pour favoriser une bonne fluidité du matériau polymérisable, du solvant y est ajouté en quantité supérieure au matériau polymérisable. Typiquement on mélange 80% de solvant avec 20% de matériau polymérisable. A titre d'exemple purement illustratif et non limitatif le solvant est de l'acétone, connue pour sa volatilité remarquable.

Ensuite, les feuilles sont imprégnées avec le matériau polymérisable chargé au cours d'une étape d'imprégnation. L'imprégnation peut être réalisée de différentes manières. Par exemple, les feuilles peuvent être trempées dans un bain contenant la solution liquide qui comprend le matériau polymérisable avec le solvant et les particules en suspension. On retire ensuite verticalement les feuilles une à une ou en continue sous forme de bande, de sorte que la solution liquide soit retenue par sa tension superficielle dans les mailles et enrobe les fibres.

Dans une étape d'empilement, on empile les feuilles les unes sur les autres. On presse ensuite les feuilles empilées de façon à évacuer un maximum de la solution liquide, notamment à évacuer les excédents de solution entre les feuilles. Le solvant favorisant le mouillage des fibres, généralement ensimées, un film de solution persiste autour des fibres. L'opération de pressage est effectuée en plaçant l'empilement de feuilles entre deux plaques rigides dont la surface est au moins égale à celle des feuilles. La pression avec laquelle les feuilles sont pressées, est juste suffisante pour amener les fibres 27, 28 d'une feuille 2 supérieure en contact avec les fibres 17, 18 d'une feuille 1 inférieure sans provoquer d'intrication des fibres et en laissant subsister un film de liquide à l'échelle moléculaire entre les fibres sur leur point de contact. Une partie des particules est évacuée sur le côté des feuilles avec la solution liquide elle-même et une partie considérable des particules est chassée dans les mailles où les particules sont retenues prisonnières dans la solution liquide. Durant l'opération de pressage à température ambiante, le solvant qui s'évapore contribue à augmenter progressivement la viscosité du liquide, favorisant ainsi le freinage des particules dans les mailles.

Dans une étape d'étuvage, on amène les feuilles empilées pressées à une température suffisante pour polymériser le matériau polymérisable. La montée en température est progressive de façon à se répartir de façon homogène dans l'empilement de feuilles. Au début de la montée en température, le solvant termine de se volatiliser, laissant le matériau polymérisable à l'état concentré pour mouiller les fibres et une majorité de particules dans les mailles. La montée en température continuant, le matériau se polymérise de façon à enrober les fibres de matériau polymère qui lie une partie inférieure des fibres 17, 18 de la feuille 1 à une partie supérieure des fibres 27, 28 de la feuille 2 voisine.

En polymérisant, le matériau polymère lie aussi les microparticules les unes aux autres à l'intérieur d'une maille de façon à créer des microstructures rigides qui obstruent les mailles et s'opposent ainsi à la pénétration d'une feuille par un corps extérieur, notamment par une fibre d'une feuille voisine.

On continue ensuite à monter la température en maintenant la pression constante, jusqu'à approcher une température de rupture des chaînes polymères de façon à fragiliser les forces de liaison cohésives dans la masse du polymère, au bénéfice des forces de liaisons adhésives sur les interfaces de la matière qui constitue les fibres. On a observé une carbonisation du polymère utilisé à partir de 350°C.

Les forces de liaison cohésives qui persistent alors à l'échelle microscopique ont plusieurs effets techniques bénéfiques. Le collage obtenu entre les particules d'une même maille, crée des microstructures de taille naturellement adaptée à celle de la maille pour l'obstruer et conjuguer ainsi une dureté intérieure à la maille avec la dureté des fibres pour résister à de hautes pressions. La dureté apparente étant alors très proche de la dureté de la matière qui constitue les fibres, le choix du verre permet d'atteindre un module d'Young proche de 69000 MPa dans le sens de l'épaisseur. Le collage obtenu à chaque endroit où la fibre 17, 18, d'une feuille, touche la fibre 27, 28 d'une autre feuille, est vu à l'échelle macroscopique comme une force de cohésion qui lie les fibres de deux feuilles voisines. La cohésion entre feuilles évite un délitage involontaire.

Le procédé que nous venons d'expliquer permet ainsi d'obtenir une cale d'épaisseur 10 comprenant un empilement de feuilles 1, 2 qui comprennent chacune un réseau maillé de fibres 7, 8. L'épaisseur du film polymère qui enrobe les fibres est si faible que l'épaisseur de la cale est égale à l'épaisseur d'une feuille multipliée par le nombre de feuilles empilées. L'épaisseur d'une feuille est déterminée par le diamètre des fibres et la nature du tissage. La surface de collage entre les fibres enrobées du matériau polymère, est si faible que la force de cohésion qui lie les fibres d'une feuille aux fibres d'une feuille voisine, est inférieure à la limite de rupture des fibres. Après avoir amorcé le décollement d'une feuille, il suffit alors de cintrer la feuille pour la peler sans la déchirer. Chaque maille du réseau maillé comprend des particules 9 de dimensions inférieures aux dimensions de la maille et au diamètre des fibres 7, 8 liées ou non liées entre elles par quelques quantités rémanentes de monomères ou d'oligomères après polymérisation et carbonisation vers 350°. La dureté des particules au moins égale à celle des fibres empêche l'intrication des fibres d'une feuille voisine dans les mailles et confère ainsi à la cale une haute résistance en pression.

La présence de cyano ester dans les traces restantes de matériau polymère, améliore la tenue en température de la cale, notamment à 300°C.

On peut aisément observer au microscope optique, les particules de dimension micrométriques qui obstruent les mailles.

Les particules de dimension micrométriques peuvent être remplacées en tout ou en partie par des particules de dimensions nanométrique que l'on peut aisément observer au microscope électronique.

Les nano particules facilitent les étapes d'incorporation et d'imprégnation au cours du procédé de fabrication en donnant à la solution liquide une nature colloïdale. Dans la cale d'épaisseur à l'état fini, l'obstruction des mailles est plus homogène.

## Revendications

1. Cale d'épaisseur (10) comprenant un empilement de feuilles (1, 2), chaque feuille comprenant un réseau maillé de fibres (7, 8) qui détermine une épaisseur de ladite feuille, les fibres étant enrobées d'un matériau polymère qui lie au moins une première partie des fibres de ladite feuille à une deuxième partie de fibres d'une feuille voisine avec une force de cohésion inférieure à une limite de rupture des fibres de façon à permettre de peler une feuille sans la déchirer, **caractérisé en ce qu'**une maille dudit réseau maillé comprend des particules (9) de dimensions inférieures aux dimensions de ladite maille et au diamètre d'une fibre (7, 8) et de dureté au moins égale à celle des fibres.

2. Cale d'épaisseur selon la revendication 1, **caractérisée en ce que** ledit matériaux polymère comprend un cyano ester.

3. Cale d'épaisseur selon l'une des revendications précédentes, **caractérisée en ce que** les particules (9) et les fibres (7, 8) comprennent au moins une matière identique.

4. Cale d'épaisseur selon l'une des revendications précédentes, **caractérisée en ce que** lesdites particules (9) comprennent des particules de dimensions micrométriques.

5. Cale d'épaisseur selon l'une des revendications précédentes, **caractérisée en ce que** lesdites particules (9) comprennent des particules de dimensions nanométriques.

6. Procédé de fabrication d'une cale d'épaisseur comprenant:
- une étape de sélection dans laquelle on sélectionne des feuilles comprenant chacune un réseau maillé de fibres ;
- une étape d'incorporation dans laquelle on charge un matériau polymérisable en y incorporant des particules de dimensions inférieures au mailles dudit réseau et de dureté au moins égale à celle des fibres ;
- une étape d'imprégnation dans laquelle on imprègne les feuilles avec le matériau polymérisable chargé ;
- une étape d'empilement dans laquelle on empile les feuilles les unes sur les autres et on presse les feuilles empilées ;
- une étape d'étuvage dans laquelle on amène les feuilles empilées pressées à une température suffisante pour polymériser ledit matériau de façon à enrober les fibres de matériau polymère qui lie au moins une première partie des fibres de ladite feuille à une deuxième partie de fibres d'une feuille voisine.

7. Procédé selon la revendication 6, **caractérisé en ce qu'**il comprend une étape de préparation effectuée avant l'étape d'imprégnation et dans laquelle on combine un cyano ester avec le matériau polymérisable.

8. Procédé selon l'une des revendications 6 ou 7, **caractérisé en ce qu'**il comprend une étape de broyage effectuée avant l'étape d'incorporation et dans laquelle lesdites particules sont produites en broyant des chutes qui proviennent de cales d'épaisseur précédemment fabriquées.

9. Procédé selon l'une des revendications 6 à 8, **caractérisé en ce que** les particules sont incorporées dans le matériau polymérisable par pulvérisation et/ou par agitation.

10. Procédé selon l'une des revendications 6 à 9, **caractérisé en ce que** du solvant est ajouté dans le matériau polymérisable en quantité supérieure au matériau polymérisable.

## Claims

1. A shim (10), comprising a stack of films (1, 2), with each film comprising a meshed grid of fibers (7, 8) determining the thickness of said film, the fibers being coated with a polymer material linking at least a first portion of the fibers of said film to a second fiber portion of a neighboring film with a cohesive force lower than a breaking point of the fibers so that the film can be peeled off without tearing, **characterized in that** one mesh of said meshed grid includes particles (9) having dimensions which are smaller than the dimensions of said mesh and the diameter of a fiber (7, 8), and hardness at least equal to that of the fibers.

2. The shim according to claim 1, **characterized in that** said polymer materials comprise a cyanoester.

3. The shim according to any of the preceding claims, **characterized in that** the particles (9) and the fibers (7, 8) include at least one identical material.

4. The shim according to any of the preceding claims, **characterized in that** said particles (9) comprise particles of micrometer dimensions.

5. The shim according to any of the preceding claims, **characterized in that** said particles (9) comprise particles of nanometer dimensions.

6. A method for producing a shim, comprising:
- a selecting step in which films are selected which each comprise a meshed fiber grid;
- an incorporating step in which a polymerizable material is loaded by incorporating particles therein which have dimensions smaller than the meshes of said grid and a hardness at least equal to that of the fibers;
- an impregnating step in which the films are impregnated with the loaded polymerizable material;
- a stacking step in which the films are stacked on each other and the stacked films are pressed;
- a baking step in which the stacked and pressed films are brought to a temperature sufficient for polymerizing said material so as to coat the fibers with polymer material linking at least a first portion of the fibers of said film to a second portion of fibers of a neighboring film.

7. The method according to claim 6, **characterized in that** it comprises a preparing step performed before the impregnating step and in which a cyanoester is combined with the polymerizable material.

8. The method according to any of claims 6 or 7, **characterized in that** it comprises a crushing step performed before the incorporating step and in which said particles are produced by crushing trims from previously produced shims.

9. The method according to any of claims 6 to 8, **characterized in that** the particles are incorporated into the polymerizable material by sputtering and/or stirring.

10. The method according to any of claims 6 to 9, **characterized in that** a solvent is added to the polymerizable material in a quantity greater than the polymerizable material.

## Patentansprüche

1. Unterlegscheibe (10), umfassend einen Stapel von Folien (1, 2), wobei jede Folie ein vermaschtes Netz aus Fasern (7, 8), das eine Dicke der Folie bestimmt, umfasst, wobei die Fasern von einem Polymermaterial umhüllt sind, das mindestens einen ersten Teil der Fasern der Folie mit einem zweiten Faserteil einer benachbarten Folie mit einer Bindekraft, die geringer ist als ein Reißpunkt der Fasern, verbindet, so dass man die Folie abziehen kann ohne sie zu zerreißen, **dadurch gekennzeichnet, dass** eine Masche des vermaschten Netzes Teilchen (9) umfasst, die Abmessungen, die kleiner sind als die Abmessungen der Masche und als der Durchmesser einer Faser (7, 8), und eine Härte, die mindestens gleich derjenigen der Fasern ist, aufweisen.

2. Unterlegscheibe nach Anspruch 1, **dadurch gekennzeichnet, dass** die Polymermaterialien einen Cyanester umfassen.

3. Unterlegscheibe nach einem der vorhergehenden Ansprüche, **dadurch gekennzeichnet, dass** die Teilchen (9) und die Fasern (7, 8) mindestens eine identische Substanz umfassen.

4. Unterlegscheibe nach einem der vorhergehenden Ansprüche, **dadurch gekennzeichnet, dass** die Teilchen (9) mikrometergroße Teilchen umfassen.

5. Unterlegscheibe nach einem der vorhergehenden Ansprüche, **dadurch gekennzeichnet, dass** die Teilchen (9) nanometergroße Teilchen umfassen.

6. Verfahren zum Herstellen einer Unterlegscheibe, umfassend:
- einen Auswahlschritt, bei dem Folien ausgewählt werden, die jeweils ein vermaschtes Fasernetz umfassen;
- einen Einarbeitungsschritt, bei dem ein polymerisierbares Material beschwert wird, indem Teilchen darin eingearbeitet werden, deren Abmessungen kleiner als die Maschen des Netzes sind und deren Härte mindestens gleich derjenigen der Fasern ist;
- einen Imprägnierschritt, bei dem die Folien mit dem beschwerten polymerisierbaren Material imprägniert werden;
- einen Stapelschritt, bei dem die Folien übereinander gestapelt werden und die gestapelten Folien gepresst werden;
- ein Temperschritt, bei dem die gepressten gestapelten Folien auf eine Temperatur gebracht werden, die ausreicht, um das Material zu polymerisieren, um die Fasern mit Polymermaterial zu umhüllen, das mindestens einen ersten Teil der Fasern der Folie mit einem zweiten Faserteil einer benachbarten Folie verbindet.

7. Verfahren nach Anspruch 6, **dadurch gekennzeichnet, dass** es einen Vorbereitungsschritt umfasst, der vor dem Imprägnierschritt ausgeführt wird und bei dem ein Cyanester mit dem polymerisierbaren Material kombiniert wird.

8. Verfahren nach einem der Ansprüche 6 oder 7, **dadurch gekennzeichnet, dass** es einen Zerkleinerungsschritt umfasst, der vor dem Einarbeitungsschritt ausgeführt wird und wobei die Teilchen durch das Zerkleinern von Abfällen von zuvor hergestellten Unterlegscheiben hergestellt werden.

9. Verfahren nach einem der Ansprüche 6 bis 8, **dadurch gekennzeichnet, dass** die Teilchen in das polymerisierbare Material durch Zerstäuben und/oder Bewegen eingearbeitet werden.

10. Verfahren nach einem der Ansprüche 6 bis 9, **dadurch gekennzeichnet, dass** Lösemittel zu dem polymerisierbaren Material in einer größeren Menge als das polymerisierbare Material hinzugefügt wird.
